Europäisches Patentamt

European Patent Office

Office européen des brevets

(11) Publication number: **0 189 659**
**B1**

(12) **EUROPEAN PATENT SPECIFICATION**

(45) Date of publication of patent specification: **09.11.88**

(51) Int. Cl.⁴: **F 01 K 25/00,** F 42 B 19/20, C 01 B 3/08

(21) Application number: **85309042.1**

(22) Date of filing: **12.12.85**

(54) Reaction system for closed energy supply apparatus.

(30) Priority: **13.12.84 US 681161**

(43) Date of publication of application:
**06.08.86 Bulletin 86/32**

(45) Publication of the grant of the patent:
**09.11.88 Bulletin 88/45**

(84) Designated Contracting States:
**DE FR GB IT SE**

(56) References cited:
**US-A-3 101 592**
**US-A-3 229 462**
**US-A-3 291 572**
**US-A-3 302 401**
**US-A-3 328 957**
**US-A-3 486 332**

**CHEMICAL ABSTRACTS, vol. 102, no. 2,
January 1985, page 131, abstract no. 8956m,
Columbus, Ohio, US; K.G. SHCHERBINA:
"Solid-phase reaction products in hydrogen
generation processes", & PROBL.
MASHINOSTR. 1983, 20, 83-6**

(73) Proprietor: **ALLIED-SIGNAL INC.
Columbia Road and Park Avenue P.O. Box 2245R
Morristown New Jersey 07960 (US)**

(72) Inventor: **Wood, Palmer R.
6706 North 60th Street
Paradise Valley Arizona 85253 (US)**

(74) Representative: **Rees, David Christopher et al
Kilburn & Strode 30 John Street
London WC1N 2DD (GB)**

Courier Press, Leamington Spa, England.

## Description

The present invention relates to a reaction system for a closed energy supply apparatus such as a steam engine, particularly an internal combustion, closed Rankine cycle, steam engine which might be used to propel underwater vehicles.

Underwater warfare has advanced to the point where it is highly desirable to minimise noise and exhaust from underwater vehicles, such as torpedoes and the like, so that they will not be detected by sophisticated antisubmarine weapons. It is an object of the present invention to provide a reaction system for use in an engine which can be used with torpedoes, mines, mine laying vehicles and the like that will propel these vehicles with a minimum of noise and no exhaust trail so that they cannot be easily detected.

It is a further object of this invention to provide such an engine with high specific power to weight and power to volume ratios. These are highly desirable, particularly a high specific power to volume ratio, because then the underwater vehicle will have either a greater range or will travel to the target at a higher speed, depending upon the design of the vehicle. Also, if a torpedo has a relatively low volume, more may be stored in a submarine than torpedoes employing engines having lower specific power to volume ratios.

U.S. Patent No. 3,101,592 discloses a reaction system for a closed energy supply system in which a fuel is reacted in order to release energy, the fuel being reacted with water to produce hydrogen and to liberate heat, the hydrogen then being reacted with oxygen to produce water in the form of steam. In other words, there is shown an internal combustion, closed Rankine cycle steam engine. It has high specific power to weight and power to volume ratios, but has the disadvantage of using fuels which at the completion of the combustion cycle yield an excess of water. This water must be either stored in the vehicle or exhausted, which would frustrate the objective of eliminating exhaust.

It is therefore a further object of the present invention to provide an engine which does not produce an excess of water and which does not leave an exhaust trail.

According to the present invention, there is provided a reaction system for a closed energy supply system which is characterised in that the fuel is composed of substantially equal molar quantities of metallic lithium and metallic aluminium and the steam is produced in an amount equal to the water consumed in the reaction with the fuel.

Thus, as will be appreciated, no water or steam is produced over and above that consumed so no water or steam needs to be exhausted from the system.

Preferably, the fuel is reacted with the water in a first chamber, the hydrogen is reacted with the oxygen in a second chamber and steam produced by the reaction in the second chamber is condensed and recycled to the first chamber. Preferably, a portion of the condensed steam is reacted with the fuel in the first chamber and the remainder is heated by the heat of the reaction in the first chamber prior to being conveyed to the second chamber as steam.

Preferably, the hydrogen and oxygen react in the second chamber to produce superheated steam which is partially quenched by the steam produced following heat exchange with the first chamber. Preferably the steam from the second chamber is used to drive a mechanical power converter, prior to its condensation.

In a preferred embodiment, the first chamber defines a fuel-holding cavity having an inlet with water injection means, an outlet with a filter allowing free passage of hydrogen and heat exchange means for heat transfer from the fuel. There are preferably valve means for controlling the flow of fluids within the system.

Preferably, the mechanical power converter is a steam turbine and the system as a whole constitutes a propulsion unit for an underwater vehicle. Since the steam is condensed and recycled, this eliminates any trail from the torpedo which could be detected, thereby substantially reducing the possibility of detection.

According to another aspect of the present invention, there is provided a method of propelling an underwater vehicle by means of a reaction system for a closed energy supply system in which fuel is reacted to release energy, characterised by the steps of reacting water with a fuel composed essentially of equal molar quantities of metallic lithium and metallic aluminium to produce hydrogen and to liberate heat; using the heat produced to vaporise water to steam; reacting oxygen with the hydrogen produced to maintain combustion producing water as superheated steam in an amount equal to the water consumed in the reaction with the fuel; the steam produced from the reaction of the fuel to quench partially the superheated steam; driving a mechanical power converter to produce shaft power from the tempered steam and exhaust the spent steam; and condensing the spent steam to water which is recycled.

According to another aspect of the present invention there is provided a Rankine engine including a turbine, a water source, an oxygen source, a fuel source, two reaction chambers, and a heat exchanger; the water reacting with the fuel in one chamber to produce hydrogen and heat, that hydrogen reacting with the oxygen in the other chamber to produce superheated steam, the heat from the first reaction being used to heat water in the heat exchanger to raise steam which quenches the superheated steam prior to the steam mixture driving the turbine, the steam mixture then being condensed and recycled to the fuel and heat exchanger.

The advantages of the present invention over known systems for propelling an underwater vehicle may be summarised as follows:—

1. There is no exhaust, thereby reducing the likelihood of detection through an exhaust trail.

2. There is a more efficient transfer of heat produced by the reaction of water with the fuel.

3. The oxygen used to react with the hydrogen may be stored in either solid, liquid or gaseous form.

4 The reactions are carried out in two separate reaction zones thus providing greater control of the reactions.

5. The working fluid (the steam) used to drive the turbine engine is constantly recycled, providing greater efficiency and ease of handling.

6. Since solid metallic fuels are used, they are essentially immediately converted to the molten state thereby facilitating heat transfer to the steam or working fluid.

7. The heat exchangers employed in the engine are substantially lighter weight because of the ability to control internal engine pressures.

8. The temperature of the inlet steam to the turbine can be as high as the turbine components will tolerate, thus, high turbine efficiency can be obtained, providing the desired high specific power to weight and power to volume ratios.

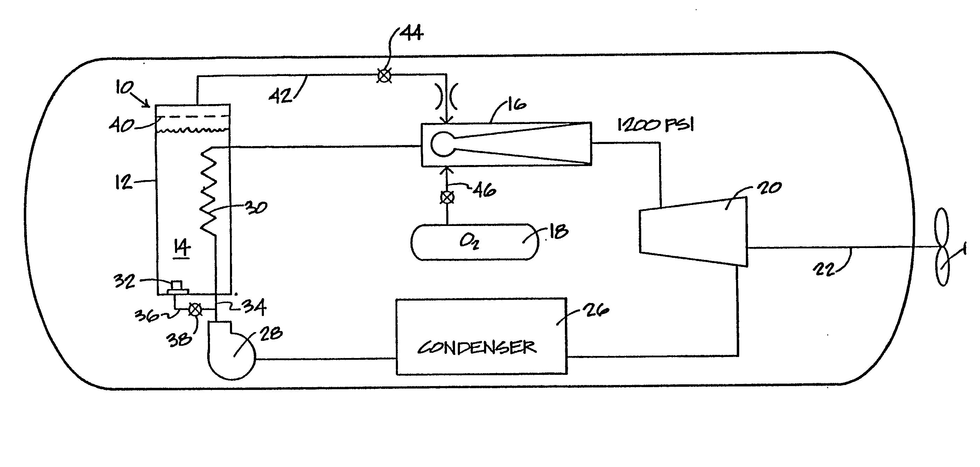

The invention may be carried into practice in various ways and one embdiment will now be described in which the single figure is a schematic illustration of an engine in accordance with the invention.

The engine shown in the Figure is a steam engine 10 in the form of an internal combustion engine employing a closed Rankine cycle.

The engine comprises a first reaction chamber 12 which holds a solid fuel 14, a second reaction chamber 16 where the hydrogen produced in the first reaction chamber is mixed with oxygen stored in a high pressure vessel 18, a turbine 20, which has its drive shaft 22 attached to a propeller 24, a condenser 26 which includes a chamber holding the water which is cycled by a pump 28 through a heat exchanger 30 associated with the first reactor, and an injector 32 which injects water into the first reactor to react this water with the fuel 14 contained in the reactor.

The reaction chamber 12 also includes, at its upper end. a filter 40 which will filter out any particles of fuel etc. which may clog downstream lines and equipment. The reaction chamber 12 is shown as holding the heat exchanger 30, and though the heat exchanger 30 could be placed outside the chamber, this would not be the most efficient arrangement as will be appreciated. Because of the internal pressures of the system, the walls of the heat exchanger may be relatively thin, resulting in a more efficient transfer of heat, a less costly heat exchanger, and a more efficient and compact engine.

The operation of the engine 10 is as follows. The solid fuel 14 is first converted to a molten state by the use of any suitable heat source, for example an aluminium potassium perchlorate (Al-KClO$_4$) flare mixture. The water contained within the condenser 26 is fed by the pump 28 through a line 34 into the inlet end of the heat exchanger 30. There is a branch line 36, including a valve 38 which leads to the injector 32 which, when the valve is opened, injects water directly into the reaction chamber 12. This water, fed directly into the reaction chamber 12, reacts with the fuel 14 to produce hydrogen and heat. The fuel 14 employed will not produce more hydrogen than the hydrogen associated with the water being reacted with the fuel. Thus, when the hydrogen produced in the chamber 12 reacts with the oxygen in chamber 16, the amount of water formed equals the amount fed into chamber 12. Thus, a material balance is maintained, avoiding the production of excess water.

The water flowing through the heat exchanger 30 is converted to steam by the heat produced in the reaction chamber 12. The hydrogen produced from the reaction of the water with the fuel leaves the reaction chamber through an outlet line 42 which includes a valve 44 for controlling the flow of this hydrogen into the inlet end of the second reaction chamber 16. This second reaction chamber is of the type commonly referred to as an Aphoid combustor. Oxygen stored in a suitable vessel 18 under pressure is fed through a valved line 46 into the second reaction chamber 16 simultaneously with the introduction of the hydrogen into this chamber.

In addition to introducing hydrogen and oxygen into the chamber 16, the working fluid or steam coming from the outlet end of the heat exchanger 30 is conveyed to the second reaction chamber and serves to act as a medium for controlling the temperature produced in the second reaction chamber. In other words, the steam acts as a quench gas which can lower the temperature produced in the second reaction chamber.

The hydrogen and oxygen will react to produce additional steam which, combined with the steam from the heat exchanger 30, flows out of the reaction chamber 16 as superheated steam and into the inlet end of the turbine 20. Because the pressure within the second reaction chamber is approximately the same as the pressure in the first reaction chamber, the differential pressure across the walls of the heat exchanger 30 is relatively low. This enables the heat exchanger to be made with thin walls.

The superheated steam leaving the chamber 16 is at an elevated pressure and temperature and it drives the blades of the turbine 20 which in turn turns the propeller 24, propelling the torpedo through the water. The energy liberated by the steam in driving the turbine results in the temperature of the steam being lowered. This steam is conveyed to the condenser 26 which converts it to water which is then recycled to the heat exchanger. Since no excess water is produced, this water from the turbine is simply recycled through the system.

The engine operation is based on obtaining heat energy through chemical reactions to provide steam at an elevated temperature and pressure for use in driving the turbine 20 in order to provide the mechanical power required to turn the propeller 24. The fuel preferably is a solid metallic material, which upon reacting with water, will produce hydrogen and heat. Metals such as sodium, magnesium, lithium, aluminium and mixtures of these are typically used. Preferably, an equal molar mixture of aluminium and lithium is used.

These metals are highly reactive materials which will produce the hydrogen and heat and, if there is any oxygen present, will immediately result in the reaction of hydrogen and oxygen to produce water with explosive force. Consequently, the first reaction chamber 12 is sealed so that no oxygen will enter this chamber when the water is reacting with the fuel

The following formulae illustrate the chemical reactions occurring:

$$(1) \quad Li+Al+2H_2O \rightarrow 2H_2+LiAlO_2+ \\ 4302 \text{ BTU } (4539kJ) \qquad (1)$$

$$(2) \quad 2H_2+O_2 \rightarrow 2H_2O+ \\ 5775 \text{ BUT } (6093kJ) \qquad (2)$$

The following is an analysis of the heat release based upon one pound (0.454 kg) of water used in the first reaction chamber 12. To start the reaction, the lithium must first be melted using a high heat release source such as a mono-propellant. Upon injection of the water, the following reaction will take place:

$$2 Li+2H_2O \rightarrow H_2+2 LiOH+ \\ 3633 \text{ BTU } (3833kJ) \qquad (3)$$

The liberation of heat resulting from the reaction of water with lithium will melt the aluminium and will provide a molten bath of aluminium and lithium. By controlling the rate at which water is introduced into the first reaction chamber 12, it is possible to control the temperature. Assuming that the water is controlled so that the temperature of the reaction is 1400°F (760°C) an analysis of the heat produced is as follows:

In accordance with Equation 1, one pound (0.454 kg) of water will react with 0.193 pound (0.0875 kg) of lithium and 0.749 pound (0.340 kg) of aluminium to provide 0.112 pound (0.0508 kg) of hydrogen gas and 1.83 pounds (0.830 kg) of lithium aluminium oxide ($LiAlO_2$) plus 8,355 British thermal units (BTU) (8815kJ). The lithium aluminium oxide has a melting temperature of over 2900°F (1593°C) and is insoluble in water. Consequently, it will precipitate in the reaction chamber 12. The heat required to raise one pound (0.454 kg) of water from 60°F (15.6°C) to 1400°F (760°C) at 1,000 PSI ($7.03 \times 10^5$kg/m²) is 1,702 BTU (1796 kJ). Thus, the net heat available to heat the water to produce steam is 8,355 minus 1,702 BTU or 6,653 BTU (7019kJ).

To continue the analysis based upon the reactions occurring according to equation 2, the 0.112 pound (0.0508 kg) of hydrogen will react with 0.888 pound (0.403 kg) of oxygen to form 1.0 pound (0.454 kg) of water plus 5,775 British thermal units of heat 6093 kJ). Assuming the oxygen is stored cryogenically at −279°F (−173°C) and 1,000 psia ($7.03 \times 10^5$ kg/m²), at least the heat of vaporisation can be provided by the exhaust of the steam from the turbine 20. This requires 2,934 BTU (3096 kJ) per pound (0.454 kg) of oxygen. Heat required to raise 0.888 a pound (0.403 kg) of oxygen to 1,600°F is

$$362 \text{ BTU } [1,600-(-279)] \times 0.217 \times 0.888.$$

The heat required to raise 0.112 pound (0.0508 kg) of hydrogen from 1400°F (670°C) to 1600°F (871°C) is 77 BTU's (81.2 kJ). Thus, the net heat available to transfer to the water working fluid in the second reactor is 5335 BTU (5629 kJ) and the total heat available to the water working fluid is 11,988 BTUs (12648 kJ). With the steam temperature of 1600°F (871°C) at 100 psia ($7.3 \times 10^5$ kg/m²), 1817 BTUs (1918 kJ) are required for each pound (0.454 kg) of working medium. Therefore, the water flow required for heat balance is 11,988 divided by 1,817 of 6.60 pounds (2.994 kg). When the one pound (0.454 kg) of steam formed by the hydrogen/oxygen reaction in the second reactor is added to this value, the total steam flow to the power conversion expanding is 7.60 pounds (3.447 kg) at 1600°F (871°C) at 1,000 psia ($7.3 \times 10^5$ kg/m²).

The total heat added from both reactions is thus 1,817 × 7.6 or 13,803 BTU (14, 563 kJ). Since one pound (.0454 kg) of water used for reaction in the first reactor is returned to the water storage vessel, the thermal energy available per pound of reactants used in terms of kilowatt hours per pounds (KW—Hr/Lb) is 2.21 (4.87 kW—Hr/kg). In terms of kilo watt hour per cubic foot of fuel, the thermal energy per cubic foot of reactants is 180 (6357 kw—Hr/m³).

The above analysis has been provided simply for illustration purposes and other steam temperatures and pressures may be selected dependent upon different applications requirements.

**Claims**

1. A reaction system for a closed energy supply system in which a fuel is reacted in order to release energy, the fuel being reacted with water to produce hydrogen and to liberate heat, the hydrogen then being reacted with oxygen to produce water in the form of steam, characterised in that the fuel (14) is composed of substantially equal molar quantities of metallic lithium and metallic aluminium and the steam is produced in an amount equal to the water consumed in the reaction with the fuel.

2. A system as claimed in Claim 1 characterised in that the fuel is reacted with the water in a first chamber (12), the hydrogen is reacted with the oxygen in a second chamber (16), and steam produced by the reaction in the second chamber (16) is condensed (26) and recycled (34) to the first chamber (12).

3. A system as claimed in Claim 2 characterised in that a portion of the condensed steam is reacted with the fuel (14) in the first chamber (12) and the remainder is heated by the heat of the reaction in the first chamber (12) prior to being conveyed to the second chamber (16) as steam.

4. A system as claimed in Claim 3 characterised in that the hydrogen and oxygen react in the second chamber (16) to produce superheated steam which is partially quenched by the steam produced following heat exchange (30) with the first chamber (12).

5. A system as claimed in any of Claims 2 to 4 characterised in that the steam from the second chamber (16) is used to drive a mechanical power converter (20), prior to its condensation (26).

6. A system as claimed in any of Claims 2 to 5 characterised in that the first chamber (12) defines a fuel-holding cavity having an inlet with water injection means (32), an outlet with a filter (40) allowing free passage of hydrogen and heat exchange means (30) for heat transfer from the fuel (14).

7. A system as claimed in any preceding claim characterised by valve means (38, 40) for controlling the flow of fluids within the system.

8. A system as claimed in any of Claims 5 to 7 characterised in that the mechanical power converter is a steam turbine (20) and the system as a whole constitutes a propulsion unit for an underwater vehicle.

9. A method of propelling an underwater vehicle by means of a reaction system for a closed energy supply system in which fuel is reacted to release energy, characterised by the steps of reacting water with a fuel composed essentially of equal molar quantities of metallic lithium and metallic aluminium to produce hydrogen and to liberate heat; using the heat produced to vaporise water to steam; reacting oxygen with the hydrogen produced to maintain combustion producing water as superheated steam in an amount equal to the water consumed in the reaction with the fuel; using the steam produced from the reaction of the fuel to quench partially the superheated steam; driving a mechanical power converter to produce shaft power from the tempered steam and exhausting the spent steam; and condensing the spent steam to water which is recycled.

**Patentansprüche**

1. Reaktionssystem für einen Energieversorgungskreislaufapparat, bei dem ein Brennstoff zur Freigabe von Energie einer Reaktion unterzogen wird, wobei der Brennstoff mit Wasser reagiert, um Wasserstoff zu erzeugen und Wärme freizusetzen, und wobei der Wasserstoff dann mit Sauerstoff in Reaktion tritt, um Wasser in Form von Dampf zu erzeugen, dadurch gekennzeichnet, daß der Brennstoff (14) aus im wesentlichen gleichen molaren Mengen von metallischem Lithium und metallischem Aluminium zusammengesetzt ist, und der Dampf in einer Menge erzeugt wird, die gleich dem bei der Reaktion mit dem Brennstoff verbrauchte Wasser ist.

2. Reaktionssystem nach Anspruch 1, dadurch gekennzeichnet, daß der Brennstoff mit dem Wasser in einer ersten Kammer (12) reagiert, daß der Wasserstoff mit dem Sauerstoff in einer zweiten Kammer (16) reagiert, und daß durch die Reaktion in der zweiten Kammer (16) erzeugter Dampf kondensiert (26) und wieder in die erste Kammer (12) zurückgeführt (34) wird.

3. Reaktionssystem nach Anspruch 2, dadurch gekennzeichnet, daß ein Teil des kondensierten Dampfes mit dem Brennstoff (14) in der ersten Kammer (12) reagiert, und daß der Rest durch die Reaktionswärme in der ersten Kammer (12) erhitzt wird, bevor er der zweiten Kammer (16) als Dampf zugeführt wird.

4. Reaktionssystem nach Anspruch 3, dadurch gekennzeichnet, daß Wasserstoff und Sauerstoff in der zweiten Kammer (16) eine Reaktion eingehen, um überhitzten Dampf zu erzeugen, der teilweise durch den Dampf abgeschreckt wird, der im Anschluß an den Wärmeaustausch (30) mit der ersten Kammer (12) erzeugt wird.

5. Reaktionssystem nach einem der Ansprüche 2—4, dadurch gekennzeichnet, daß der Dampf aus der zweiten Kammer (16) verwendet wird, um einen mechanischen Energieumwandler (20) anzutreiben, bevor der Dampf kondensiert (26).

6. Reaktionssystem nach einem der Ansprüche 2—5, dadurch gekennzeichnet, daß die erste Kammer (12) einen Brennstoffaufnahmeraum festlegt, der einen Einlaß mit einer Wassereinspritzvorrichtung (32), einen Auslaß mit einem Filter (40) für den freien Durchgang von Wasserstoff, und eine Wärmeaustauschvorrichtung (30) für die Wärmeübertragung vom Brennstoff (14) besitzt.

7. Reaktionssystem nach einem der vorausgehenden Ansprüche, gekennzeichnet durch eine Ventilvorrichtung (38, 40) zur Steuerung des Durchflusses von Strömungsmitteln innerhalb des Systems.

8. Reaktionssystem nach einem der Ansprüche 5—7, dadurch gekennzeichnet, daß der mechanische Energieumwandler eine Dampfturbine (20) ist, und daß das System als Ganzes eine Antriebseinrichtung für ein Unterwasserfahrzeug bildet.

9. Verfahren zum Antreiben eines Unterwasserfahrzeuges mit Hilfe eines Reaktionssystems für einen Energieversorgungskreislaufapparat, bei dem Brennstoff einer Reaktion unterzogen wird, um Energie freizusetzen, dadurch gekennzeichnet, daß Wasser mit einem Brennstoff in Reaktion gebracht wird, der im wesentlichen aus gleichen molaren Mengen von metallischem Lithium und metallischem Aluminium zusammengesetzt ist, um Wasserstoff zu erzeugen und Wärme freizusetzen, daß die erzeugte Wärme zum Verdampfen von Wasser in Wasserdampf verwendet wird, daß Sauerstoff mit dem Wasserstoff in Reaktion gebracht wird, der erzeugt wird, um die Verbrennung aufrecht zu erhalten, wobei Wasser als überhitzter Dampf in einer Menge erzeugt wird, die gleich der Wassermenge ist, die bei der Reaktion mit dem Brennstoff verbraucht wird, daß der aus der Reaktion des Brennstoffes erzeugte Dampf verwendet wird, um den überhitzten Dampf teilweise abzuschrecken, daß ein mechanischer Energieumwandler angetrieben wird, um Wellenabgabeenergie aus dem wärmebehandelten Dampf zu erzeugen und den verbrauchten Dampf abzulassen, und daß der verbrauchte Dampf zu Wasser kondensiert wird, das erneut in den Kreislauf eingeführt wird.

**Revendications**

1. Système à réaction pour un appareil de production d'énergie en cycle fermé dans lequel on fait réagir un combustible afin de libérer de l'énergie, le combustible réagissant avec de l'eau pour produire de l'hydrogène et libérer de la chaleur, l'hydrogène réagissant ensuite avec de l'oxygène pour produire de l'eau sous la forme de vapeur, caractérisé en ce que le combustible (14) est composé de quantités molaires sensiblement égales de lithium métallique et d'aluminium métallique et en ce que la vapeur est produite en une quantité égale à la quantité d'eau consommée dans la réaction avec le combustible.

2. Système suivant la revendication 1, caractérisé en ce qu'on fait réagir le combustible avec l'eau dans une première chambre (12), on fait réagir l'hydrogène avec l'oxygène dans une deuxième chambre (16); et la vapeur produite par la réaction dans la deuxième chambre (16) est condensée (26) et recyclée (34) vers la première chambre (12).

3. Système suivant la revendication 2, caractérisé en ce qu'on fait réagir une partie de la vapeur condensée avec le combustible (14) dans la première chambre (12) et le reste est chauffé par la chaleur de la réaction dans la première chambre (12) avant d'être envoyé à la deuxième chambre (16) sous forme de vapeur.

4. Système suivant la revendication 3, caractérisé en ce que l'hydrogène et l'oxygène réagissent dans la deuxième chambre (16) pour produire de la vapeur surchauffée qui est partiellement refroidie par la vapeur produite à la suite de l'échange de chaleur (30) avec la première chambre (12).

5. Système suivant l'une quelconque des revendications 2 à 4, caractérisé en ce que la vapeur sortant de la deuxième chambre (16) est utilisée pour entraîner un convertisseur d'énergie mécanique (20), avant sa condensation (26).

6. Système suivant l'une quelconque des revendications 2 à 5, caractérisé en ce que la première chambre (12) définit une cavité de réserve de combustible comportant une entrée avec des moyens d'injection d'eau (32), une sortie avec un filtre (40) permettant le libre passage de l'hydrogène, et des moyens d'échange de chaleur (30) pour le transfert de chaleur à partir du combustible (14).

7. Système suivant l'une quelconque des revendications précédentes, caractérisé par des moyens de commutation (38) pour commander la circulation des fluides à l'intérieur du système.

8. Système suivant l'une quelconque des revendications 5 à 7, caractérisé en ce que le convertisseur d'énergie mécanique est une turbine à vapeur (20) et le système dans son ensemble constitue un groupe propulseur pour un véhicule sous-marin.

9. Procédé de propulsion d'un véhicule sous-marin au moyen d'un système à réaction pour un appareil de production d'énergie en cycle fermé dans lequel on fait réagir un combustible pour libérer de l'énergie, caractérisé en ce qu'il consiste: à faire réagir de l'eau avec un combustible composé essentiellement de quantités molaires égales de lithium métallique et d'aluminium métallique pour produire de l'hydrogène et libérer de la chaleur; à utiliser la chaleur produite, pour vaporiser l'eau en vapeur; à faire réagir de l'oxygène avec de l'hydrogène produit, pour maintenir une combustion produisant de l'eau sous forme de vapeur surchauffée en une quantité égale à la quantité d'eau consommée dans la réaction de la réaction du combustible, pour refroidir partiellement la vapeur surchauffée; à entraîner un convertisseur d'énergie mécanique pour produire une puissance sur un arbre, à partir de la vapeur désurchauffée, et évacuer du convertisseur la vapeur usée; et à condenser la vapeur usée en eau qui est recyclée.

0 189 659

44

10

40

42

16

1200 PSI

12

30

20

14

46

32

O₂  18

36  34

38  28

22

CONDENSER  26